# FASCICULE DE BREVET EUROPEEN

(11) **EP 2 492 938 B1**
(45) Date de publication et mention de la délivrance du brevet: **04.04.2018**
(21) Numéro de dépôt: 12305217.7
(22) Date de dépôt: 24.02.2012
(51) Int. Cl.: H01H 9/06, B60L 3/02, B60T 7/10, H01H 3/02

(54) **Manipulateur de conduite comprenant une touche tactile**
Handbetätigter Fahrschalter, der mit einer berührungsempfindlichen Taste ausgestattet ist
Drive controller including a touch-sensitive button

(30) Priorité: 24.02.2011 FR 1151510
(43) Date de publication de la demande: 29.08.2012
(73) Titulaire: ALSTOM Transport Technologies, 93400 Saint-Ouen (FR)
(72) Inventeur: Miglianico, Denis, 69160 Tassin (FR)
(74) Mandataire: Lavoix

(56) Documents cités:
- EP-A1- 2 148 346
- EP-A2- 1 400 426
- WO-A1-01/61431
- WO-A1-2008/009443

## Description

La présente invention concerne un manipulateur de conduite de véhicule du type comprenant un dispositif de traitement de veille automatique par contrôle de maintien d'appui et un bras de levier, s'étendant à partir d'un élément de support et apte à se déplacer selon une direction d'actionnement prédéterminée avec, disposée sur une extrémité du bras opposée à l'élément de support, une poignée de forme externe adaptée à la forme de la paume d'une main, la poignée comportant une face supérieure située à l'opposé du bras de levier par rapport à la poignée et au moins une face latérale s'étendant sensiblement perpendiculairement à la face supérieure, la poignée comprenant une touche tactile connectée électriquement au dispositif de traitement de veille automatique par contrôle de maintien d'appui, ladite touche étant située sur la face latérale de la poignée.

Un tel manipulateur s'applique notamment à des véhicules ferroviaires, tels que les trains ou tramways, au sein d'un système de Veille Automatique par Contrôle de Maintien d'Appui (VACMA). Un tel système, installé à bords des cabines de conduite, permet de surveiller la vigilance du conducteur du véhicule ferroviaire, en lui imposant d'actionner, de façon régulière, un organe de contrôle de manière à vérifier qu'il n'est pas endormi, voire victime d'un malaise ou décédé et à déclencher dans le cas d'un défaut de vigilance un arrêt d'urgence du véhicule ferroviaire. Typiquement, il est demandé au conducteur d'actionner l'organe de contrôle pendant une durée comprise entre 15 et 60 secondes, puis à le relâcher pendant une durée de 2 à 5 secondes.

Le document EP-2 148 346 décrit un organe de contrôle intégré à un manipulateur de conduite du véhicule ferroviaire et réalisé sous la forme d'une touche tactile sensible au toucher et notamment activable par le pouce de la main du conducteur se servant du manipulateur de conduite.

Le manipulateur de conduite décrit dans ce document est particulièrement ergonomique et permet d'obtenir un système VACMA réduisant les contraintes de fatigue physique et psychique qu'un tel système impose au conducteur du véhicule ferroviaire, notamment par rapport à un système dans lequel l'organe de contrôle est formé par un bouton manuel ou une pédale sur lesquels le conducteur doit exercer une pression.

Cependant, la touche tactile décrite est une touche très localisée et de surface réduite. En effet, une telle touche présente par exemple une forme circulaire et un diamètre d'une dizaine de millimètres.

Ainsi, bien que la touche tactile soit positionnée de façon ergonomique sur le manipulateur, elle n'est pas adaptée à tous les types de morphologies. Par conséquent, pour certains conducteurs, la touche tactile peut être difficilement accessible à son pouce, ce qui oblige le conducteur à adopter une position non naturelle ou à déplacer son pouce pour effectuer l'activation et la désactivation de la touche tactile, par contact avec le pouce, selon les contraintes de temps exigées. A la longue, cette position ou ce mouvement peuvent devenir douloureux et entraîner une fatigue physique et conduire à des troubles musculo-squelettique.

Notamment, lorsque la main tient la poignée du manipulateur horizontalement, le pouce est disposé à une certaine hauteur de cette poignée et, en fonction de la morphologie du conducteur, il n'est pas nécessairement en regard de la touche tactile. Le pouce s'étend alors soit au-dessus, soit en dessous de la touche tactile, ce qui empêche une activation naturelle et intuitive de celle-ci.

L'un des buts de l'invention est de pallier à cet inconvénient en proposant un manipulateur de conduite, comprenant une touche tactile, d'un dispositif de traitement de veille automatique par contrôle de maintien d'appui, facilement accessible pour tous les conducteurs, quelle que soit la morphologie de leur main.

A cet effet, l'invention concerne un manipulateur de conduite du type précité, selon les caractéristiques de la revendication 1. La demanderesse a constaté que, lorsqu'une main tient la poignée du manipulateur à l'horizontal, son pouce se trouve à une hauteur sensiblement égale à la largeur de la paume de la main. Ainsi, en réalisant une touche tactile s'étendant sur une hauteur importante couvrant pratiquement toutes les largeurs possibles de mains, on s'assure que le pouce du conducteur se trouvera en regard de la touche tactile, quelle que soit la morphologie du conducteur, et que celui-ci pourra réaliser l'activation de la commande de veille automatique dans des conditions optimales.

Selon d'autres caractéristiques du manipulateur de conduite selon l'invention :
- le bord inférieur de la touche tactile est disposé à une hauteur comprise entre 60 mm et 65mm ;
- le bord supérieur de la touche tactile est disposé à une hauteur est comprise entre 90 mm et 95 mm ;
- la poignée comprend une embase, de forme sensiblement tubulaire s'étendant selon l'axe du bras de levier, surmontée d'une tête de forme sensiblement ovoïde dont le grand axe est incliné par rapport à l'axe du bras de levier ;
- la touche tactile comprend des bords latéraux reliant le bord inférieur au bord supérieur, lesdits bords latéraux présentant une forme sensiblement identique à la forme d'une partie de la tête de la poignée en regard de laquelle s'étendent lesdits bords latéraux ;
- la touche tactile présente une forme sensiblement elliptique et s'étend selon un grand axe s'étendant entre le bord inférieur et le bord supérieur de la touche tactile ;
- la largeur de la touche tactile est comprise entre un tiers et quatre-vingt quinze pourcent de la largeur de la tête de la poignée ; et
- la poignée comprend un unique organe de contrôle, formé par ladite touche tactile.

D'autres aspects et avantages de l'invention apparaîtront à la lecture de la description qui suit, donnée à titre d'exemple et faite en référence aux dessins annexés, dans lesquels :
- la figure 1 est une représentation schématique de côté d'un manipulateur de conduite selon l'invention, selon un premier mode de réalisation de la touche tactile,
- la figure 2 est une représentation schématique de côté d'un manipulateur de conduite qui ne forme pas part de la présente invention,
- la figure 3 est une représentation schématique de face d'un manipulateur de conduite selon l'invention,
- la figure 4 est une représentation schématique en perspective d'un manipulateur de conduite tenu par la main d'un conducteur, et
- la figure 5 est une représentation schématique en perspective d'un manipulateur de conduite tenu par la main d'un conducteur d'une façon différente.

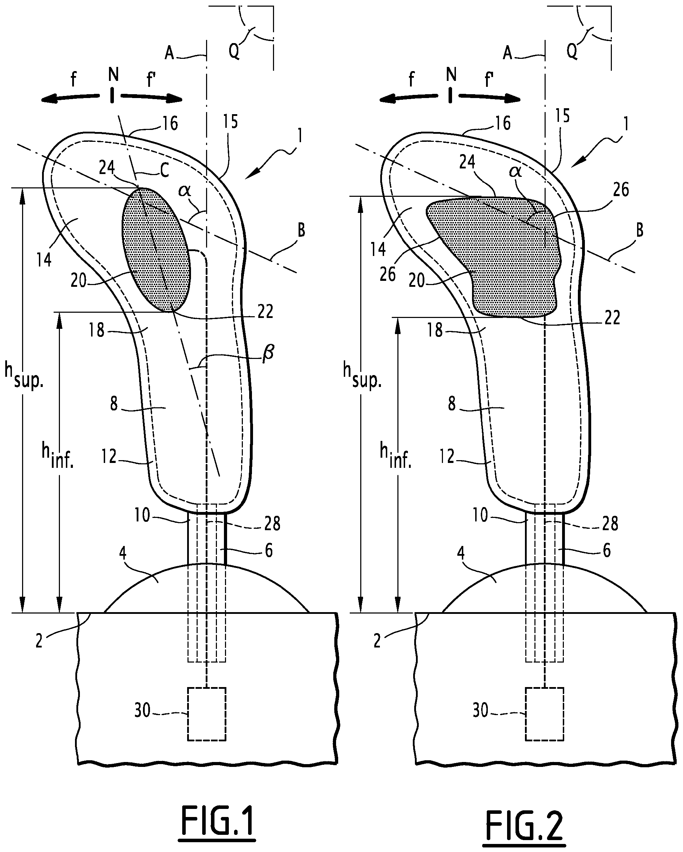

En référence aux figures, on décrit un manipulateur de conduite 1 de véhicule, notamment ferroviaire, monté mobile en rotation sur un élément de support 2 plan d'un pupitre de conduite, par exemple installé à bord d'une cabine de conduite. Le manipulateur 1 est apte à être déplacé selon un mouvement de rotation, par rapport à l'élément de support 2, dans deux directions opposées, représentées par les flèches f et f' des figures 1 et 2 et contenues dans un plan de course défini par un cylindre 4 prévu mobile en rotation sur l'élément de support 2.

Lorsque le manipulateur 1 est actionné en rotation vers l'avant, selon la flèche f des figures 1 et 2, il est actionné en traction du véhicule, c'est-à-dire que le véhicule avance lors de cet actionnement. Lorsque le manipulateur 1 est actionné en rotation vers l'arrière, selon la flèche f' des figures 1 et 2, il est actionné en freinage du véhicule, c'est-à-dire que le véhicule freine lors de cet actionnement. Une position neutre N intermédiaire est définie et correspond à une absence de commande de conduite.

Le manipulateur 1 comprend un bras de levier 6 s'étendant selon un axe A en élévation par rapport à l'élément de support 2 et saillant du cylindre 4. Le bras de levier 6 est fixé sur un cylindre 4 mobile en rotation par rapport à l'élément de support 2. Une poignée 8 est emmanchée sur l'extrémité libre 10 du bras de levier 6, à l'opposé la partie du bras de levier 6 saillant de la glissière 4, et s'étend dans la continuité de ce bras de levier 6. L'axe A du bras de levier 6 est sensiblement vertical lorsque le manipulateur est dans la position neutre N.

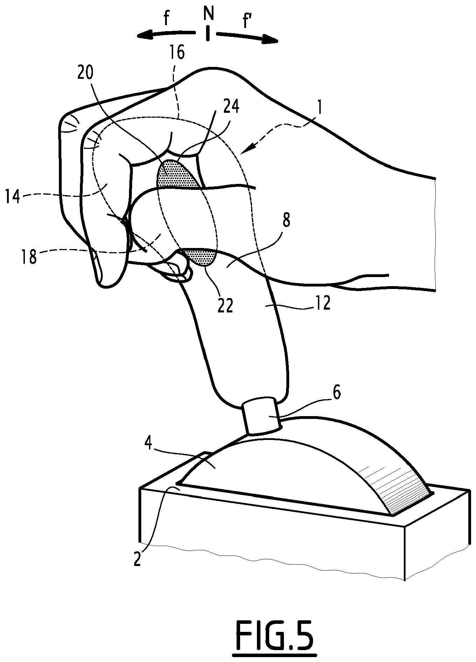

La poignée 8 comprend une embase 12 sensiblement cylindrique et s'étendant selon l'axe A du bras de levier 6 à partir de l'extrémité libre 10 du bras de levier 6. La poignée 8 comprend en outre une tête 14 de forme sensiblement ovoïde surmontant l'embase 12 et inclinée par rapport à celle-ci, comme représenté sur les figures 1 et 2, c'est-à-dire que le grand axe B de la tête 14, s'étendant selon la direction avant-arrière de la poignée 8, forme un angle α avec l'axe A selon lequel s'étend l'embase. L'angle α est par exemple compris entre 5° et 85°. De plus la face arrière 15 de la tête 14, sur laquelle la paume de la main du conducteur est destinée à prendre appui lorsque la poignée est tenue comme représenté sur la figure 5, présente un rayon de courbure compris entre 30 et 40 mm et de préférence égal à 35mm.

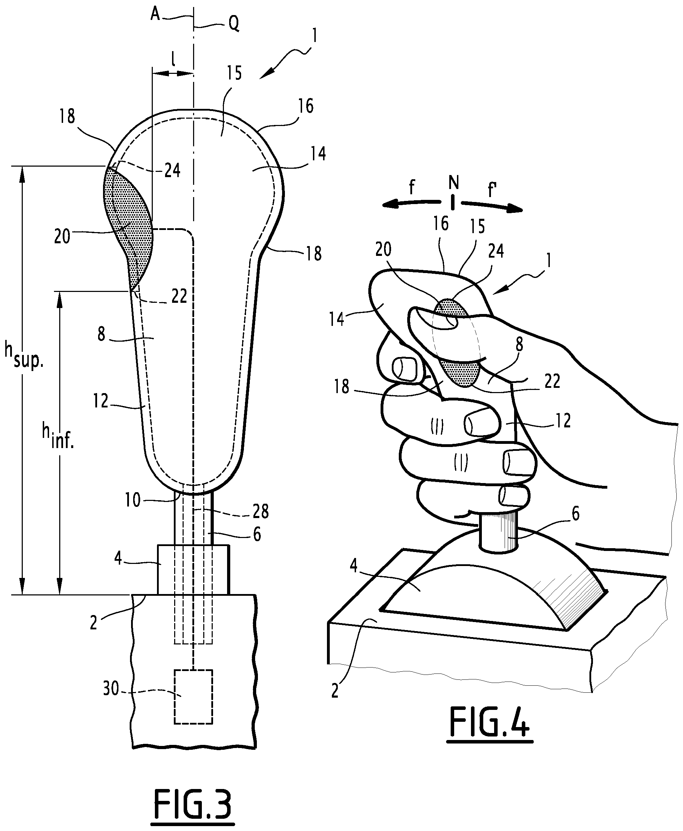

Une telle forme de poignée 8 est particulièrement ergonomique et peut être saisie de façon naturelle par la main du conducteur du véhicule, comme représenté sur la figure 4.

En dehors de la touche tactile décrite ci-dessous, la poignée 8 est sensiblement telle que décrite dans le document EP-2 148 346 et est formée par une coque comprenant une face supérieure 16, s'étendant en regard de l'élément de support 2 à l'opposé de l'extrémité libre 10 du bras de levier 6, et deux faces latérales 18, s'étendant sensiblement perpendiculairement à la face supérieure 16, de part et d'autre d'un plan de symétrie Q de la poignée 8 incluant l'axe A du bras de levier 6 et les directions avant f et arrière f' du manipulateur 6.

Une touche tactile 20, sensible au toucher, s'étend sur l'une des faces latérales 18 de la poignée 8. La touche tactile 20 s'étend sur la face latérale 18 gauche, comme représenté sur les figures 3 et 4, lorsque le manipulateur est destiné à être positionné à droite d'un conducteur. La touche tactile 20 s'étend sur la face latérale 18 droite, lorsque le manipulateur est destiné à être positionné à gauche d'un conducteur. Ainsi, lorsque le conducteur tient la poignée 18 dans sa main, comme représenté sur la figure 4, la touche tactile 20 s'étend sur la face latérale 18 sur laquelle est disposée le pouce du conducteur. La touche tactile 20 est par exemple disposée dans un orifice de la coque de la poignée 8 et affleure la face latérale 18 sur laquelle elle est disposée.

La touche tactile 20 s'étend en hauteur, c'est-à-dire selon la direction d'élévation du bras de levier 6 et de la poignée 8, entre un bord inférieur 22 et un bord supérieur 24, formés respectivement par le ou les points les plus bas et par le ou les points les plus hauts de la touche tactile 20 sur la poignée 8.

Le bord inférieur 22 s'étend à une hauteur h_{inf} égale à la distance séparant le bord inférieur 22 et l'élément de support plan 2 et le bord supérieur 24 s'étend à une hauteur hₛᵤₚ égale à la distance séparant le bord supérieur 24 et l'élément de support plan 2, comme représenté sur les figures 1 à 3. Les valeurs h_{inf} et hₛᵤₚ sont choisies pour que le pouce du conducteur se trouve en regard de la touche tactile lorsque le conducteur tient la poignée avec la main à l'horizontale, comme représenté sur la figure 4, quelle que soit la morphologie de la main du conducteur. Lorsque la main du conducteur tient la poignée 8 à l'horizontale, comme représenté sur la figure 4, le pouce se trouve à une hauteur correspondant sensiblement à la largeur de la paume de la main du conducteur.

Par conséquent, la valeur h_{inf} est choisie comme étant inférieure ou égale à au cinquième centile de la largeur de la paume de la main de la population féminine et la valeur de hₛᵤₚ est choisie comme étant supérieure ou égale au quatre-vingt quinzième centile de la largeur de la paume de la main de la population masculine, la population considérée étant par exemple la population Française.

Cela signifie que, statistiquement, 95% de la population féminine française présente une largeur de paume supérieure ou égale à h_{inf} et que 95% de la population masculine française présente une largeur de paume inférieure ou égale à hₛᵤₚ. Ainsi, pratiquement toute la population présente une main dont le pouce se trouvera en regard de la touche tactile 20 lorsque celle-ci tient le manipulateur 1 à l'horizontale. Le cinquième centile de la largeur de la paume de la main de la population féminine est compris entre 55 mm et 85 mm. En France, il est sensiblement égal à 67 mm. Le quatre-vingt quinzième centile de la largeur de la paume de la main de la population masculine est compris entre 85 et 115 mm. En France, il est sensiblement égal à 98 mm.

Selon un mode de réalisation, h_{inf} est compris entre 52 mm et 82 mm. En particulier, h_{inf} est par exemple compris entre 60 mm et 65mm. Plus particulièrement, h_{inf} est par exemple inférieur ou égal à 62 mm

Selon un mode de réalisation, hₛᵤₚ est compris entre 88 mm et 118 mm. En particulier, hₛᵤₚ est par exemple compris entre 90 mm et 95 mm. Plus particulièrement, hₛᵤₚ est par exemple inférieur ou égal à 95 mm.

Par conséquent, quelle que soit la morphologie de la main du conducteur, qu'il soit une femme ou un homme, son pouce se trouve en regard de la touche tactile 20 qu'il peut ainsi activer sans effort particulier du positionnement du pouce, ce qui lui permet de garder une position naturelle, réduisant la fatigue physique et psychique liée à l'activation de la commande de veille automatique.

La distance I de la touche tactile 20 au plan de symétrie Q est sensiblement comprise entre 20 mm et 30 mm. Selon un mode de réalisation, la distance I est inférieure à 25 mm afin d'avoir une touche tactile 20 positionnée de façon optimale sur la poignée. En particulier, on choisit une touche tactile 20 dont la largeur est comprise entre un tiers et quatre-vingt quinze pourcent de la plus grande largeur de la tête 14 de la poignée 8. La touche tactile 20 présente ainsi une superficie importante, permettant d'adapter l'activation de la commande de veille automatique à toutes les morphologies de main.

Selon le mode de réalisation représenté sur les figures 1 et 4, la touche tactile 20 présente une forme sensiblement elliptique et s'étend selon un grand axe C s'étendant entre le bord inférieur 22 et le bord supérieur 24. En variante, selon un mode de réalisation, le grand axe C est sensiblement parallèle à l'axe A du bras de levier 6. Selon le mode de réalisation représenté sur les figures, le grand axe C forme un angle β non nul avec l'axe A du bras de levier 6. L'angle β est par exemple compris en 5° et 30° de façon à assurer un positionnement optimal de la touche tactile 20, celle-ci s'étendant « en travers » de la tête 14 de la poignée de sorte à couvrir une surface importante de celle-ci.

Selon le mode de réalisation représenté sur la figure 2, qui ne forme pas part de la présente invention, la touche tactile 20 comprend deux bords latéraux 26 reliant les bord inférieurs 22 et supérieur 24, les bords latéraux 26 présentant une forme sensiblement identique à la forme d'une partie de la tête 14 de la poignée 8 se trouvant en regard de ces bords latéraux 26. Ainsi, la touche tactile 20 « suit » une partie du contour de la tête 14 de la poignée, ce qui permet de couvrir une surface importante de celle-ci.

D'autres formes de touche tactile peuvent être envisagées. En particulier, les formes permettant d'augmenter la surface activable de la touche tactile 20 permettent d'améliorer l'ergonomie du système de Veille Automatique par Contrôle de Maintien d'Appui.

La touche tactile 20 est connectée électriquement par un câble électrique 28 à un dispositif 30 de traitement de veille automatique à contrôle de maintien d'appui. A cet effet, le bras de levier 6 et la poignée 8 sont creux de manière à fournir un passage au câble électrique 28 relié à la touche tactile 20, le passage étant inaccessible depuis l'extérieur lorsque le manipulateur 1 est monté sur l'élément de support 4.

En variante, la touche tactile 20 est couplée à un émetteur radiofréquence et le dispositif de traitement 30 comprend un récepteur radiofréquence apte à recevoir des signaux émis par l'émetteur radiofréquence.

La touche tactile 20 forme un condensateur dont la surface tactile fixe constitue une face d'armature, le condensateur ayant une capacité variable en fonction de la présence ou non d'un contact de la peau d'un doigt sur la surface tactile de la touche tactile 20. Le contact est assuré dès que le doigt touche ou dès que le doigt appuie sur la touche tactile 20 avec une très faible pression sans la déformer. La variation de la capacité est mesurée de manière classique par l'application au travers du câble 28 et aux bornes du condensateur d'une tension variable fournie par une source de tension alternative intégrée au dispositif de traitement 30 et par la mesure du courant circulant dans l'impédance montée en série présentée par le condensateur. Le dispositif de traitement 30 comprend un relais électromécanique ou un élément électronique, par exemple un transistor, apte à détecter un passage de courant lors d'un appui sur la touche tactile 20. En variante, c'est une coupure de courant qui est détectée lors d'un appui sur la touche tactile.

Le dispositif de traitement 30 est apte à surveiller le respect du cycle VACMA par le conducteur et à vérifier que la touche tactile 20 est régulièrement maintenue en contact avec au moins un des doigts pendant une durée comprise entre 15 et 60 secondes suivi d'un relâchement pendant une durée de 2 à 5 secondes. Ainsi, il est vérifié que le conducteur n'est pas endormi, ou autre, et il est possible de déclencher dans le cas d'un défaut de vigilance un arrêt d'urgence du véhicule.

Le manipulateur 1 peut être tenu par le conducteur de différentes manières. On pourra se référer au document EP-2 148 346 pour plus de détails sur son fonctionnement.

Lorsque le manipulateur 1 est tenu comme représenté sur la figure 4, l'exercice conjoint de la manoeuvre de conduite vers l'avant et l'activation de la veille se fait sans effort car aucune torsion du poignet n'est nécessaire, quelle que soit la morphologie de la main du conducteur.

Selon un mode de réalisation, la touche tactile 20 forme l'unique organe de contrôle de la poignée 8. C'est-à-dire que cette poignée ne comprend aucun autre organe, tel qu'un bouton, une autre touche tactile ou autre dont l'activation pourrait se faire par erreur selon la façon dont le conducteur tient la poignée 8.

Le manipulateur 1 décrit ci-dessus permet à tout type de conducteur de le manoeuvrer tout en respectant le cycle VACMA de façon ergonomique grâce à sa touche tactile 20 adaptée à toutes le morphologies de main.

## Revendications

1. Manipulateur (1) de conduite de véhicule comprenant un dispositif de traitement (30) de veille automatique par contrôle de maintien d'appui et un bras de levier (6), s'étendant à partir d'un élément de support (2) et apte à se déplacer selon une direction d'actionnement (f, f') prédéterminée avec, disposée sur une extrémité (10) du bras opposée à l'élément de support (2), une poignée (8) de forme externe adaptée à la forme de la paume d'une main, la poignée (8) comportant une face supérieure (16) située à l'opposé du bras de levier (6) par rapport à la poignée (8) et au moins une face latérale (18) s'étendant sensiblement perpendiculairement à la face supérieure (16), la poignée (8) comprenant une touche tactile (20) connectée électriquement au dispositif de traitement (30) de veille automatique par contrôle de maintien d'appui, ladite touche (20) étant située sur la face latérale (18) de la poignée (8), **caractérisé en ce que** la touche tactile (20) s'étend entre un bord inférieur (22), disposé à une hauteur (h_{inf}) par rapport à l'élément de support (2) comprise entre 52 mm et 82 mm, et un bord supérieur (24), disposé à une hauteur (hₛᵤₚ) par rapport à l'élément de support (2) comprise entre 88 mm et 118 mm, et **en ce que** la touche tactile (20) présente une forme sensiblement elliptique et s'étend selon un grand axe (C) s'étendant entre le bord inférieur (22) et le bord supérieur (24) de la touche tactile (20), le grand axe (C) formant un angle (β) non nul avec l'axe (A) du bras de levier (6), l'angle (β) du grand axe (C) de la forme elliptique par rapport à l'axe (A) du bras de levier (6) étant compris entre 5° et 30°.

2. Manipulateur de conduite selon la revendication 1, **caractérisé en ce que** le bord inférieur (22) de la touche tactile (20) est disposé à une hauteur (h_{inf}) comprise entre 60 mm et 65mm,

3. Manipulateur de contrôle selon la revendication 1 ou 2, **caractérisé en ce que** le bord supérieur (24) de la touche tactile (20) est disposé à une hauteur (hₛᵤₚ) est comprise entre 90 mm et 95 mm.

4. Manipulateur de conduite selon l'une quelconque des revendications 1 à 3, **caractérisé en ce que** la poignée (8) comprend une embase (12), de forme sensiblement tubulaire s'étendant selon l'axe (A) du bras de levier (6), surmontée d'une tête (14) de forme sensiblement ovoïde dont le grand axe (B) est incliné par rapport à l'axe (A) du bras de levier (6).

5. Manipulateur de conduite selon la revendication 4, **caractérisé en ce que** la largeur de la touche tactile (20) est comprise entre un tiers et quatre-vingt quinze pourcent de la largeur de la tête (14) de la poignée (8).

6. Manipulateur de conduite selon l'une quelconque des revendications 1 à 5, **caractérisé en ce que** la poignée (8) comprend un unique organe de contrôle, formé par ladite touche tactile (20).

7. Manipulateur de conduite selon l'une quelconque des revendications 1 à 6, **caractérisé en ce que** la poignée (20) est symétrique par rapport à un plan de symétrie (Q) contenant l'axe (A) du bras de levier (6), la distance (I) de la touche tactile (20) au plan de symétrie (Q) étant comprise entre 20 et 30mm.

8. Manipulateur de conduite selon l'une quelconque des revendications 4 à 7, **caractérisé en ce que** la face arrière (15) de la tête (14) présente un rayon de courbure sensiblement compris entre 30 mm et 40 mm.

## Patentansprüche

1. Fahrzeug-Fahrsteuerhebel (1), aufweisend eine Vorrichtung zum Betreiben (30) einer Totmanneinrichtung via Prüfung des Aufrechterhaltens einer Auflage und einen Hebelarm (6), der sich ausgehend von einem Trägerelement (2) aus erstreckt und imstande ist sich entlang einer vorbestimmten Betätigungsrichtung (f, f') zu bewegen, mit, angeordnet an einem zu dem Trägerelement (2) entgegengesetzten Ende (10) des Arms, einem Griff (8) mit einer äußeren Form, die angepasst ist an die Form der Handfläche einer Hand, wobei der Griff (8) aufweist eine obere Fläche (16), die bezüglich des Griffs (8) entgegengesetzt zu dem Hebelarm (6) angeordnet ist, und wenigstens eine seitliche Fläche (18), die sich im Wesentlichen senkrecht zu der oberen Fläche (16) erstreckt, wobei der Griff (8) eine Berührungstaste (20) aufweist, die elektrisch verbunden ist mit der Vorrichtung zum Betreiben (30) der Totmanneinrichtung via Prüfung des Aufrechterhaltens einer Auflage, wobei die Berührungstaste (20) an der seitlichen Fläche (18) des Griffs (8) angeordnet ist, **dadurch gekennzeichnet, dass** sich die Berührungstaste (20) zwischen einem unteren Rand (22), der bezüglich des Trägerelements (2) in einer Höhe (h_{inf}) von zwischen 52 mm und 82 mm angeordnet ist, und einem oberen Rand (24) erstreckt, der bezüglich des Trägerelements (2) in einer Höhe (hₛᵤₚ) von zwischen 88 mm und 118 mm angeordnet ist,
und dass die Berührungstaste (20) eine im Wesentlichen elliptische Form hat und sich entlang einer großen Achse (C) erstreckt, die sich zwischen dem unteren Rand (22) und dem oberen Rand (24) des Berührungstaste (20) erstreckt, wobei die große Achse (C) einen Winkel (β) ungleich null mit der Achse (A) des Hebelarms (6) bildet, wobei der Winkel (β) der großen Achse (C) der elliptischen Form bezüglich der Achse (A) des Hebelarms (6) zwischen 5° und 30° beträgt.

2. Fahrsteuerhebel gemäß Anspruch 1, **dadurch gekennzeichnet, dass** der untere Rand (22) der Berührungstaste (20) in einer Höhe (h_{inf}) angeordnet ist, die zwischen 60 mm und 65 mm beträgt.

3. Fahrsteuerhebel gemäß Anspruch 1 oder 2, **dadurch gekennzeichnet, dass** der obere Rand (24) der Berührungstaste (20) in einer Höhe (hₛᵤₚ) zwischen 90 mm und 95 mm beträgt.

4. Fahrsteuerhebel gemäß irgendeinem der Ansprüche 1 bis 3, **dadurch gekennzeichnet, dass** der Griff (8) ein im Wesentlichen rohrförmiges Unterteil (12) aufweist, das sich entlang der Achse (A) des Hebelarms (6) erstreckt, auf welchem ein im Wesentlichen eiförmiger Kopf (14) vorragt, dessen große Achse (B) bezüglich der Achse (A) des Hebelarms (6) geneigt ist.

5. Fahrsteuerhebel gemäß dem Anspruch 4, **dadurch gekennzeichnet, dass** die Breite der Berührungstaste (20) zwischen einem Drittel und fünfundneunzig Prozent der Breite des Kopfs (14) des Griffs (8) beträgt.

6. Fahrsteuerhebel gemäß irgendeinem der Ansprüche 1 bis 5, **dadurch gekennzeichnet, dass** der Griff (8) ein einziges Steuerorgan aufweist, das von der besagten Berührungstaste (20) gebildet wird.

7. Fahrsteuerhebel gemäß irgendeinem der Ansprüche 1 bis 6, **dadurch gekennzeichnet, dass** der Griff (20) symmetrisch ist bezüglich einer Symmetrieebene (Q), die die Achse (A) des Hebelarms (6) enthält, wobei der Abstand (l) der Berührungstaste (20) zu der Symmetrieebene (Q) zwischen 20 und 30 mm beträgt.

8. Fahrsteuerhebel gemäß irgendeinem der Ansprüche 4 bis 7, **dadurch gekennzeichnet, dass** die hintere Seite (15) des Kopfs (14) einen Krümmungsradius von im Wesentlichen zwischen 30 und 40 mm hat.

## Claims

1. Vehicle driving control switch (1) comprising a processing device (30) for automatic monitoring by checking pressure maintenance, and a lever arm (6), extending from a support element (2) and able to be displaced along a predetermined actuation direction (f, f) with, disposed on one end (10) of the arm opposite the support element (2), a handle (8) of an external shape adapted to the shape of the palm of a hand, the handle (8) comprising an upper face (16) situated opposite the lever arm (6) relative to the handle (8) and at least one lateral face (18) extending substantially perpendicularly to the upper face (16), the handle (8) comprising a touch key (20) which is connected electrically to the processing device (30) for automatic monitoring by checking pressure maintenance, said key (20) being situated on the lateral face (18) of the handle (8), **characterised in that** the touch key (20) extends between a lower edge (22), disposed at a height (h_{inf}) relative to the support element (2) between 52 mm and 82 mm, and an upper edge (24), disposed at a height (hₛᵤₚ) relative to the support element (2) between 88 mm and 118 mm,
and **in that** the touch key (20) has a substantially elliptical shape and extends along a large axis (C) which extends between the lower edge (22) and the upper edge (24) of the touch key (20), the large axis (C) forming an angle (β), which is non-zero, with the axis (A) of the lever arm (6), the angle (β) of the large axis (C) of the elliptical shape relative to the axis (A) of the lever arm (6) being between 5° and 30°.

2. Driving control switch according to claim 1, **characterised in that** the lower edge (22) of the touch key (20) is disposed at a height (h_{inf}) between 60 mm and 65 mm.

3. Driving control switch according to claim 1 or 2, **characterised in that** the upper edge (24) of the touch key (20) is disposed at a height (hₛᵤₚ) between 90 mm and 95 mm.

4. Driving control switch according to any of the claims 1 to 3,
**characterised in that** the handle (8) comprises a base (12) of a substantially tubular shape which extends along the axis (A) of the lever arm (6), surmounted by a head (14) of a substantially oval shape, the large axis (B) of which is inclined relative to the axis (A) of the lever arm (6).

5. Driving control switch according to claim 4,
**characterised in that** the width of the touch key (20) is between one third and ninety-five percent of the width of the head (14) of the handle (8).

6. Driving control switch according to any of the claims 1 to 5,
**characterised in that** the handle (8) includes a single control member formed by said touch key (20).

7. Driving control switch according to any of the claims 1 to 6,
**characterised in that** the handle (8) is symmetrical relative to a plane of symmetry (Q) including the axis (A) of the lever arm (6), the distance (I) of the touch key (20) to the plane of symmetry (Q) being between 20 and 30 mm.

8. Driving control switch according to any of the claims 4 to 7,
**characterised in that** the rear face (15) of the head (14) has a radius of curvature substantially between 30 mm and 40 mm.
